# FASCICULE DE BREVET EUROPEEN

(11) **EP 3 177 998 B1**
(45) Date de publication et mention de la délivrance du brevet: **13.06.2018**
(21) Numéro de dépôt: 15759866.5
(22) Date de dépôt: 27.07.2015
(51) Int. Cl.: H04W 4/00

(54) **PROCÉDÉ DE CONSULTATION DE L'ÉTAT D'UNE RESSOURCE D'UN APPAREIL ÉLECTRONIQUE, ENTITÉ ÉLECTRONIQUE ASSOCIÉE ET APPAREIL ÉLECTRONIQUE ÉQUIPÉ D'UNE TELLE ENTITÉ ÉLECTRONIQUE**
VERFAHREN ZUR KONSULTATION DES STATUS EINER RESSOURCE EINER ELEKTRONISCHEN VORRICHTUNG, ZUGEHÖRIGE ELEKTRONISCHE EINHEIT UND ELEKTRONISCHE VORRICHTUNG MIT EINER DERARTIGEN ELEKTRONISCHEN EINHEIT
METHOD FOR CONSULTING THE STATUS OF A RESOURCE OF AN ELECTRONIC DEVICE, ASSOCIATED ELECTRONIC ENTITY AND ELECTRONIC DEVICE PROVIDED WITH SUCH AN ELECTRONIC ENTITY

(30) Priorité: 06.08.2014 FR 1457647
(43) Date de publication de la demande: 14.06.2017
(73) Titulaire: IDEMIA France, 92700 Colombes (FR)
(72) Inventeur: LIEUPART, Damien, F-92700 Colombes (FR); DOS SANTOS, Elder, F-92700 Colombes (FR)
(74) Mandataire: Jacobacci Coralis Harle
(86) Numéro de dépôt international: PCT/FR2015/052079
(87) Numéro de publication internationale: WO 2016/020601

(56) Documents cités:
- EP-A1- 2 432 277
- "Contactless Services Card Specification v2.2 - Amendment C Version 1.1.1", GlobalPlatform Card Technology, 31 juillet 2014 (2014-07-31), XP055189214, Extrait de l'Internet: URL:http://www.globalplatform.org/specific ationform.asp?fid=7823 [extrait le 2015-05-13]

## Description

### DOMAINE TECHNIQUE AUQUEL SE RAPPORTE L'INVENTION

La présente invention concerne l'utilisation d'une ressource d'un appareil électronique par une entité électronique équipant cet appareil électronique.

Elle concerne plus particulièrement un procédé de consultation de l'état d'une ressource d'un appareil électronique, une entité électronique associée et un appareil électronique équipé d'une telle entité électronique.

L'invention s'applique particulièrement avantageusement dans le cas où l'appareil électronique est également équipé d'un module sans contact et où l'entité électronique peut commander le module sans contact et échanger des données, par l'intermédiaire du module sans contact, avec un processeur de l'appareil électronique.

### ARRIERE-PLAN TECHNOLOGIQUE

Afin de pouvoir échanger des données entre un appareil électronique et un dispositif extérieur avec la possibilité d'utiliser certains protocoles cryptographiques (par exemple de chiffrement ou d'authentification), il est connu d'équiper l'appareil électronique d'un module sans contact (par exemple de type NFC) et d'une entité électronique, généralement sécurisée, telle qu'une carte à microcircuit.

On prévoit généralement dans ce type d'architecture que l'entité électronique soit activée et prenne le contrôle du module sans contact lorsqu'une communication est établie via la liaison sans contact, par exemple lorsque l'appareil électronique est approché d'un lecteur.

Dans le cadre de son fonctionnement, l'entité électronique peut alors chercher à utiliser certaines ressources de l'appareil électronique, par exemple l'interface utilisateur. L'application exécutée par l'entité électronique peut en effet vouloir communiquer un message à l'utilisateur et/ou recevoir une information de l'utilisateur (tel qu'un code PIN).

Il a de ce fait été prévu que l'entité électronique puisse obtenir des informations sur l'état de la ressource qu'elle cherche à utiliser, par exemple, dans le document *"*GlobalPlatform Card, Contactless Services, Card Specification v2.2 - Amendment C", version 1.1 (avril 2013), au moyen d'une interface de programmation intitulée *getHostDeviceUserlnterfaceState.*

### OBJET DE L'INVENTION

Dans ce contexte, la présente invention propose un procédé de consultation, par une entité électronique, de l'état d'une ressource d'un appareil électronique équipé d'un module sans contact et de l'entité électronique, comprenant les étapes suivantes (dans cet ordre) :
- émission par l'entité électronique d'une demande d'état de la ressource ;
- réception d'une information d'état de la ressource en réponse à ladite demande ;
- mémorisation de l'information d'état de la ressource ;
- exécution d'une partie au moins d'une application par un processeur de l'entité électronique ;
- appel, du fait de l'exécution de l'application, d'une interface de programmation provoquant la lecture de ladite information d'état de la ressource mémorisée.

L'information d'état de la ressource est ainsi obtenue (et mémorisée) avant la mise en oeuvre effective de l'application qui utilise cette information. L'information d'état de la ressource sera donc immédiatement disponible (par lecture de l'information mémorisée) pour l'application qui l'utilise et on évite ainsi d'aboutir à un dépassement du temps maximum de transaction prévu pour certaines applications (par exemple dans le domaine bancaire).

Selon des caractéristiques optionnelles (et donc non limitatives) :
- la demande d'état de la ressource est émise par l'entité électronique à destination du module sans contact ;
- la demande d'état de la ressource est transmise par le module sans contact à un processeur de l'appareil électronique ;
- l'information d'état de la ressource est mémorisée dans l'entité électronique ;
- l'étape d'émission de la demande d'état de la ressource est réalisée dès qu'une session sans contact est initiée entre le module sans contact et un dispositif externe ;
- l'étape d'émission de la demande d'état de la ressource est réalisée dès que ladite application est sélectionnée en vue de son exécution ;
- l'information d'état de la ressource est transmise du module sans contact à l'entité électronique après sélection de ladite application en vue de son exécution ;
- la ressource est une interface utilisateur de l'appareil électronique ;
- l'entité électronique est une carte à microcircuit intégrée à l'appareil électronique ou un élément sécurisé intégré à l'appareil électronique.

L'invention propose également une entité électronique conçue pour équiper un appareil électronique comprenant un module sans contact et offrant une ressource, l'entité électronique comprenant un module d'émission d'une demande d'état de la ressource ; un module de réception d'une information d'état de la ressource en réponse à ladite demande ; un module de mémorisation de l'information d'état de la ressource ; un processeur conçu pour exécuter une partie au moins d'une application ; et un mécanisme d'appel d'une interface de programmation conçue pour lire ladite information d'état de la ressource mémorisée, le mécanisme d'appel de l'interface de programmation étant activé du fait de l'exécution de l'application.

Ces modules peuvent en pratique être réalisés par une combinaison d'éléments matériels et d'éléments logiciels. Ainsi, pour chaque module, l'entité électronique mémorise par exemple des instructions de logiciel exécutables par le processeur de l'entité électronique afin d'utiliser un élément matériel (par exemple une interface de communication ou une mémoire) et de mettre ainsi en oeuvre la fonctionnalité offerte par le module.

L'invention propose en outre un appareil électronique offrant une ressource et équipé d'un module sans contact et d'une entité électronique telle que mentionnée ci-dessus.

Les caractéristiques optionnelles proposées ci-dessus relativement au procédé de consultation peuvent également s'appliquer à cette entité électronique et/ou à cet appareil électronique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente les éléments principaux d'un appareil électronique utilisés dans le cadre de l'invention ;
- la figure 2 représente, sous forme de logigramme, un exemple de procédé conforme à l'invention.

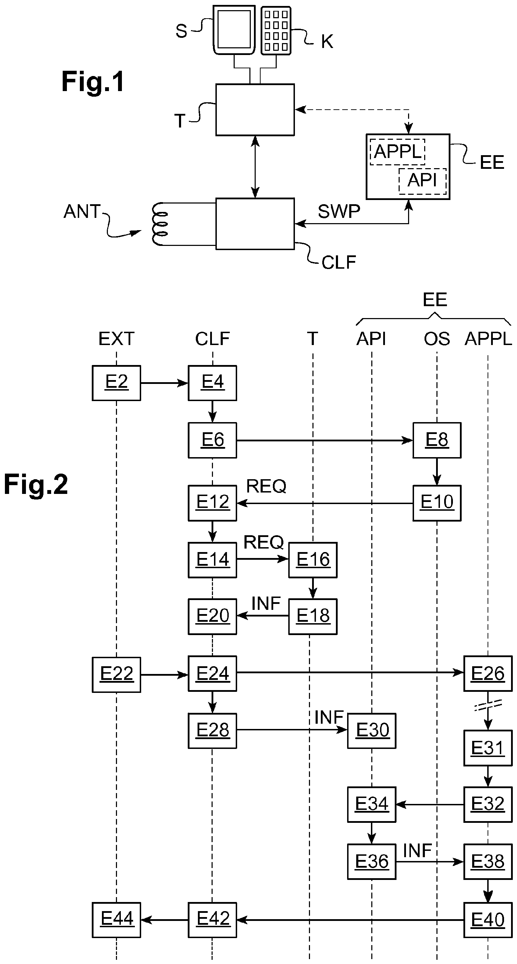

La figure 1 représente schématiquement les éléments principaux d'un appareil électronique dans lequel peut être mise en oeuvre l'invention.

L'appareil électronique est ici un terminal de communication dont certaines fonctionnalités (notamment des fonctionnalités de communication sur un réseau de télécommunications) sont gérées par un processeur T. Le processeur T est par exemple un microcontrôleur qui comprend un microprocesseur et une ou plusieurs mémoire(s).

Dans le cadre du fonctionnement du terminal, le processeur T gère notamment une interface utilisateur mise en oeuvre au moyen d'un écran S et d'un clavier K. On pourrait en variante utiliser un autre type d'interface utilisateur, par exemple mise en oeuvre par un écran tactile.

L'appareil électronique comprend également un module sans contact CLF (parfois dénommé par l'appellation anglo-saxonne *"ContactLess Front-end")* conçu pour établir, au moyen notamment d'un antenne ANT, une liaison sans fil, ici de courte portée, avec un dispositif externe, généralement équipé d'un module sans contact du même type. La liaison sans fil établie permet des échanges de données entre l'appareil électronique et le dispositif externe. Il s'agit par exemple d'une liaison de type NFC.

Afin de sécuriser ces échanges, l'appareil électronique comprend une entité électronique EE, ici une entité électronique sécurisée telle qu'une carte à microcircuit, par exemple une carte à microcircuit intégrée (typiquement soudée) à l'appareil électronique ou eUICC pour *"embedded Universal Integrated Circuit Card",* ou un élément sécurisé, par exemple un élément sécurisé intégré (typiquement soudé) à l'appareil électronique ou eSE pour *"embedded Secure Element*"*.*

L'entité électronique EE comprend elle-aussi un microprocesseur et des mémoires associées à ce microprocesseur (par exemple une mémoire vive et une mémoire non-volatile réinscriptible). Une au moins de ces mémoires (ici la mémoire non-volatile réinscriptible) mémorise des instructions de divers programmes d'ordinateur (notamment ici un système d'exploitation OS, une interface de programmation API et une application APPL, ou applet). L'entité électronique met en oeuvre des procédés, notamment ceux décrits ci-dessous, du fait de l'exécution de ces instructions par son microprocesseur.

L'entité électronique EE et le module sans contact CLF sont connectés au moyen d'une liaison filaire, par exemple de type SWP (pour *"Single Wire Protocol*"), et peuvent ainsi échanger des données ou commandes, comme décrit plus bas. Cette liaison est par exemple conforme à la norme ETSI TS 102 622 version 12.0.

Le processeur T du terminal et le module sans contact CLF sont eux aussi connectés au moyen d'une liaison filaire, par exemple de type SWP. Alternativement, il peut s'agir d'une liaison de type UART (« *Universal Asynchronous Receiver Transmitter* » en anglais), de type I2C (« *Inter Integrated Circuit* » en anglais) ou de type SPI (« *Serial Peripherical Interface* » en anglais).

Dans certaines configurations, l'entité électronique EE et le processeur T peuvent être directement reliés par une liaison filaire (représentée en pointillés en figure 1). Cette liaison n'est toutefois pas utilisée dans l'exemple présenté ici et ne sera donc pas décrite plus avant.

La figure 2 représente un exemple de procédé mis en oeuvre notamment au sein de l'appareil électronique conformément à l'invention.

Le procédé débute à l'étape E2 à laquelle une liaison sans contact s'établit entre l'appareil électronique et un dispositif externe EXT (tel qu'un lecteur NFC), par exemple suite au rapprochement de l'appareil électronique et du dispositif externe EXT (de sorte que l'antenne ANT entre dans une zone d'action d'un champ magnétique produit par le dispositif externe EXT).

Un message d'initialisation est alors transmis du dispositif externe EXT et reçu par le module sans contact CLF à l'étape E4.

Le module sans contact CLF transmet à l'étape E6 un message signalant le début d'une session sans contact à l'entité électronique EE.

Ce message est reçu à l'étape E8 par l'entité électronique EE, sur laquelle s'exécute alors un programme de gestion des fonctionnalités de base, par exemple un système d'exploitation OS.

L'entité électronique EE peut alors mettre en oeuvre diverses étapes d'initialisation de son fonctionnement. En particulier, l'entité électronique EE émet à destination du module sans contact CLF (ici du fait de l'exécution du système d'exploitation OS) une demande REQ d'état de l'interface utilisateur (étape E10).

Cette demande REQ d'état de l'interface utilisateur est reçue par le module sans contact CLF à l'étape E12 et relayée par le module sans contact CLF à destination du processeur T à l'étape E14.

Le processeur T reçoit la demande d'état de l'interface utilisateur à l'étape E16, détermine l'état de l'interface utilisateur (par exemple par consultation d'un registre dédié mémorisé au sein du processeur T qui gère, comme déjà indiqué, l'interface utilisateur) et envoie à l'étape E18 une information INF indicative de cet état à destination du module sans contact CLF.

Alternativement, le module sans contact CLF pourrait recevoir périodiquement cette information INF.

On remarque que des informations sur différentes parties de l'interface utilisateur peuvent être ainsi envoyées, par exemple une information relative à la disponibilité éventuelle de l'écran S et une information relative à la disponibilité éventuelle du clavier K. Typiquement, chaque information indique si la partie concernée de l'interface utilisateur est disponible ou indisponible.

Le module sans contact CLF reçoit ainsi au moins une information INF d'état de l'interface utilisateur à l'étape E20 et, dans le mode de réalisation décrit ici, mémorise cette information INF d'état dans une zone de mémoire dédiée du module sans contact CLF. En variante, l'information INF d'état de l'interface utilisateur pourrait (immédiatement) être transmise à l'entité électronique EE pour mémorisation dans une mémoire de l'entité électronique EE.

Lors d'une étape E22, le dispositif externe EXT émet une commande (par exemple de type APDU pour *"Application Protocol Data Unit")* visant à lancer l'exécution de l'application (ou applet) APPL au sein de l'entité électronique EE.

Cette commande est reçue à l'étape E24 par le module sans contact CLF, qui la transmet à l'entité électronique EE, ce qui provoque la sélection et le lancement de l'application APPL par l'entité électronique EE à l'étape E26.

Le module sans contact CLF transmet alors (étape E28) en outre l'information INF d'état de l'interface utilisateur à l'interface de programmation API qui réside comme déjà indiqué sur l'entité électronique. Pour ce faire, l'information INF d'état de l'interface utilisateur est transmise du module sans contact CLF à l'entité électronique EE et mémorisée dans une mémoire de l'entité électronique EE (étape E30), en étant accessible par appel de l'interface de programmation API comme décrit plus loin (sans sollicitation à cet instant de l'interface de programmation API).

Selon une variante envisageable, on peut prévoir que les étapes E14 à E20 de demande REQ d'état de l'interface utilisateur et de réception d'une information INF d'état de l'interface utilisateur ne soient pas réalisées lors de l'initialisation de la session d'échange sans fil comme proposé ci-dessus, mais lors de la sélection de l'application APPL, c'est-à-dire entre les étapes E24 et E28 qui viennent d'être décrites.

Dans tous les cas, l'exécution de l'application APPL par le microprocesseur de l'entité électronique EE se poursuit, après son lancement de l'étape E26, par des étapes E31 propres à cette application, non décrites ici, ce jusqu'à l'étape E32 où l'application APPL consulte l'état de l'interface utilisateur (typiquement avant de demander à utiliser celle-ci).

Pour ce faire, l'application APPL exécutée par le microprocesseur de l'entité électronique EE effectue un appel à l'interface de programmation API (par exemple une interface du type *getHostDeviceUserlnterfaceState).*

L'interface de programmation API est donc alors exécutée par le microprocesseur de l'entité électronique (étape E34), lit en mémoire l'information INF d'état de l'interface utilisateur (reçue et mémorisée à l'étape E30) et peut ainsi renvoyer (quasiment immédiatement) cette information INF d'état de l'interface utilisateur à l'application APPL (étape E36).

L'application APPL reçoit à l'étape E38 l'information INF d'état de l'interface utilisateur et peut ainsi utiliser cette information INF dans les étapes ultérieures de son fonctionnement. Le fait que cette information d'état INF ait été déterminée au préalable (à l'étape E16 dans l'exemple décrit ici, ou juste après la sélection de l'application selon la variante déjà mentionnée) n'est pas problématique vu la brièveté des sessions sans contact (moins de 200 ms).

Par exemple, si l'information d'état INF indique que l'interface utilisateur n'est pas disponible pour la saisie d'un code PIN (pour "*Personal Identification Number*"), l'application peut renvoyer un message d'erreur au dispositif externe EXT via le module sans contact (l'étape E42 pouvant alors consister en l'envoi de ce message d'erreur).

Si en revanche l'information d'état INF indique que l'interface utilisateur est disponible, l'application APPL commande par exemple l'affichage sur l'écran S d'un message demandant à l'utilisateur de saisir son code PIN et attend en retour la saisie du code PIN sur le clavier K. On peut alors prévoir, si l'identification de l'utilisateur est correcte (c'est-à-dire si le code PIN saisi correspond à un code PIN mémorisé dans l'entité électronique EE), que l'étape E40 consiste à commander l'envoi par le module sans contact CLF (étape E42) d'informations d'authentification de l'utilisateur.

Le dispositif externe EXT reçoit dans ce cas les informations attendues (ici des informations d'authentification) à l'étape E44.

Dans l'exemple qui vient d'être présenté, la sélection de l'application (étapes E22 à E26) est réalisée après réception par le module CLF de l'information INF d'état de la ressource (ici, l'interface utilisateur) en provenance du processeur T (étape E20). Il est toutefois envisageable que la sélection de l'application soit réalisée avant que l'information INF d'état de la ressource ne soit délivrée par le processeur T de l'appareil électronique, ces deux processus étant mis en oeuvre en parallèle.

Quoi qu'il en soit, la demande REQ d'état de la ressource étant émise suffisamment tôt (dès l'initiation de la liaison sans contact ou, en variante, dès la sélection de l'application APPL), l'information INF d'état de la ressource sera disponible (car mémorisée et donc consultable par l'entité électronique EE) lorsque l'application APPL cherchera à la consulter.

## Revendications

1. Procédé de consultation, par une entité électronique (EE), de l'état d'une ressource (S, K) d'un appareil électronique équipé d'un module sans contact (CLF) et de l'entité électronique (EE), comprenant les étapes suivantes :
- émission (E10) par l'entité électronique (EE) d'une demande (REQ) d'état de la ressource (S, K) ;
- réception d'une information (INF) d'état de la ressource (S, K) en réponse à ladite demande ;
- mémorisation (E30) de l'information (INF) d'état de la ressource (S, K) ;
- exécution (E31) d'une partie au moins d'une application (APPL) par un processeur de l'entité électronique (EE) ;
- appel (E32), du fait de l'exécution de l'application (APPL), d'une interface de programmation (API) provoquant la lecture (E34) de ladite information (INF) d'état de la ressource (S, K) mémorisée.

2. Procédé de consultation selon la revendication 1, dans lequel la demande (REQ) d'état de la ressource (S, K) est émise par l'entité électronique (EE) à destination du module sans contact (CLF).

3. Procédé de consultation selon la revendication 2, dans lequel la demande (REQ) d'état de la ressource (S, K) est transmise par le module sans contact (CLF) à un processeur (T) de l'appareil électronique.

4. Procédé de consultation selon l'une des revendications 1 à 3, dans lequel l'information (INF) d'état de la ressource (S, K) est mémorisée dans l'entité électronique (EE).

5. Procédé de consultation selon l'une des revendications 1 à 4, dans lequel l'étape d'émission (E10) de la demande (REQ) d'état de la ressource (S, K) est réalisée dès qu'une session sans contact est initiée entre le module sans contact (CLF) et un dispositif externe.

6. Procédé de consultation selon l'une des revendications 1 à 4, dans lequel l'étape d'émission (E10) de la demande (REQ) d'état de la ressource (S, K) est réalisée dès que ladite application (APPL) est sélectionnée en vue de son exécution.

7. Procédé de consultation selon l'une des revendications 1 à 6, dans lequel l'information (INF) d'état de la ressource est transmise (E28) du module sans contact (CLF) à l'entité électronique (EE) après sélection de ladite application (APPL) en vue de son exécution.

8. Procédé de consultation selon l'une des revendications 1 à 7, dans lequel la ressource est une interface utilisateur (S, K) de l'appareil électronique.

9. Procédé de consultation selon l'une des revendications 1 à 8, dans lequel l'entité électronique (EE) est une carte à microcircuit intégrée à l'appareil électronique.

10. Procédé de consultation selon l'une des revendications 1 à 8, dans lequel l'entité électronique (EE) est un élément sécurisé intégré à l'appareil électronique.

11. Entité électronique (EE) conçue pour équiper un appareil électronique comprenant un module sans contact (CLF) et offrant une ressource (S, K), l'entité électronique (EE) comprenant :
- un module d'émission d'une demande (REQ) d'état de la ressource (S, K);
- un module de réception d'une information (INF) d'état de la ressource (S, K) en réponse à ladite demande ;
- un module de mémorisation de l'information (INF) d'état de la ressource (S, K) ;
- un processeur conçu pour exécuter une partie au moins d'une application (APPL) ; et
- un mécanisme d'appel d'une interface de programmation (API) conçue pour lire ladite information (INF) d'état de la ressource (S, K) mémorisée, le mécanisme d'appel de l'interface de programmation (API) étant activé du fait de l'exécution de l'application (APPL).

12. Appareil électronique offrant une ressource (S, K) et équipé d'un module sans contact (CLF) et d'une entité électronique (EE) selon la revendication 11.

## Patentansprüche

1. Verfahren zur Konsultation des Status einer Ressource (S, K) einer mit einem kontaktlosen Modul (CLF) und einer elektronischen Einheit (EE) ausgestatteten elektronischen Vorrichtung durch die elektronische Einheit (EE), mit den Schritten:
- Aussendung (E10) einer Abfrage (REQ) des Status der Ressource (S, K) durch die elektronische Einheit (EE),
- Empfang einer Information (INF) bezüglich des Status der Ressource (S, K) als Antwort auf die Abfrage,
- Einspeicherung (E30) der Information (INF) bezüglich des Status der Ressource (S, K),
- Ausführen (E31) wenigstens eines Teils einer Applikation (APPL) durch einen Prozessor der elektronischen Einheit (EE),
- als Folge des Ausführens der Applikation (APPL), Aufrufen (E32) eines Programmierinterfaces (API), wodurch das Auslesen (E34) der eingespeicherten Information (INF) bezüglich des Status der Ressource (S, K) bewirkt wird.

2. Konsultationsverfahren gemäß Anspruch 1, bei dem die Abfrage (REQ) des Status der Ressource (S, K) durch die elektronische Einheit (EE) an das kontaktlose Modul (CLF) gerichtet wird.

3. Konsultationsverfahren gemäß Anspruch 2, bei dem die Abfrage (REQ) des Status der Ressource (S, K) durch das kontaktlose Modul (CLF) an einen Prozessor (T) der elektronischen Vorrichtung übermittelt wird.

4. Konsultationsverfahren gemäß einem der Ansprüche 1 bis 3, bei dem die Information (INF) bezüglich des Status der Ressource (S, K) in der elektronischen Einheit (EE) gespeichert wird.

5. Konsultationsverfahren gemäß einem der Ansprüche 1 bis 4, bei dem der Schritt der Aussendung (E10) der Abfrage (REQ) des Status der Ressource (S, K) erfolgt, sobald ein kontaktloser Austausch zwischen dem kontaktlosen Modul (CLF) und einer externen Vorrichtung eingeleitet wird.

6. Konsultationsverfahren gemäß einem der Ansprüche 1 bis 4, bei dem der Schritt der Aussendung (E10) der Abfrage (REQ) des Status der Ressource (S, K) erfolgt, sobald die Applikation (APPL) für deren Ausführung ausgewählt worden ist.

7. Konsultationsverfahren gemäß einem der Ansprüche 1 bis 6, bei dem die Information (INF) bezüglich des Status der Ressource nach der Wahl der Applikation (APPL) für deren Ausführung vom kontaktlosen Modul (CLF) an die elektronische Einheit (EE) übertragen wird (E28).

8. Konsultationsverfahren gemäß einem der Ansprüche 1 bis 7, bei dem die Ressource ein Benutzerinterface (S, K) der elektronischen Vorrichtung ist.

9. Konsultationsverfahren gemäß einem der Ansprüche 1 bis 8, bei dem die elektronische Einheit (EE) eine in die elektronische Vorrichtung integrierte Karte mit einer Mikroschaltung ist.

10. Konsultationsverfahren gemäß einem der Ansprüche 1 bis 8, bei dem die elektronische Einheit (EE) ein in die elektronische Vorrichtung integriertes gesichertes Element ist.

11. Elektronische Einheit (EE), die dazu ausgelegt ist, eine ein kontaktloses Modul (CLF) aufweisende und eine Ressource (S, K) bereitstellende elektronische Vorrichtung auszustatten, wobei die elektronische Einheit (EE)
- ein Modul zum Aussenden einer Abfrage (REQ) des Status der Ressource (S, K),
- ein Modul zum Empfangen einer Information (INF) bezüglich des Status der Ressource (S, K) als Antwort auf die Abfrage,
- ein Modul zum Einspeichern der Information (INF) bezüglich des Status der Ressource (S, K),
- einen Prozessor, der dazu ausgelegt ist, wenigstens einen Teil einer Applikation (APPL) auszuführen, und
- einen Mechanismus zum Aufrufen eines Programmierinterfaces (API), das zum Auslesen der eingespeicherten Information (INF) bezüglich des Status der Ressource (S, K) ausgelegt ist, wobei der Mechanismus zum Aufrufen des Programmierinterfaces (API) durch das Ausführen der Applikation (APPL) aktiviert wird, aufweist.

12. Elektronische Vorrichtung, die eine Ressource (S, K) bereitstellt und mit einem kontaktlosen Modul (CLF) und einer elektronischen Einheit (EE) gemäß Anspruch 11 ausgestattet ist.

## Claims

1. A method of consulting, by an electronic entity (EE), the state of a resource (S, K) of an electronic device equipped with a contactless module (CLF) and the electronic entity (EE), comprising the following steps:
- transmitting (E10) by the electronic entity (EE) a request (REQ) for the state of the resource (S, K);
- receiving information (INF) about the state of the resource (S, K) in response to said request;
- storing (E30) the information (INF) about the state of the resource (S, K);
- running (E31) a part at least of an application (APPL) by a processor of the electronic entity (EE);
- invoking (E32), due to the running of the application (APPL), a programing interface (API) causing the reading (E34) of said stored information (INF) about the state of the resource (S, K).

2. The consulting method according to claim 1, wherein the request (REQ) for the state of the resource (S, K) is transmitted by the electronic entity (EE) to the contactless module (CLF).

3. The consulting method according to claim 2, wherein the request (REQ) for the state of the resource (S, K) is transmitted by the contactless module (CLF) to a processor (T) of the electronic device.

4. The consulting method according to one of claims 1 to 3, wherein the information (INF) about the state of the resource (S, K) is stored in the electronic entity (EE).

5. The consulting method according to one of claims 1 to 4, wherein the step of transmitting (E10) the request (REQ) for the state of the resource (S, K) is performed as soon as a contactless session is initiated between the contactless module (CLF) and an external device.

6. The consulting method according to one of claims 1 to 4, wherein the step of transmitting (E10) for request (REQ) about the state of the resource (S, K) is performed as soon as said application (APPL) is selected for its running.

7. The consulting method according to one of claims 1 to 6, wherein the information (INF) about the state of the resource is transmitted (E28) from the contactless module (CLF) to the electronic entity (EE) after selection of said application (APPL) for its running.

8. The consulting method according to one of claims 1 to 7, wherein the resource is a user interface (S, K) of the electronic device.

9. The consulting method according to one of claims 1 to 8, wherein the electronic entity (EE) is a microcircuit card integrated to the electronic device.

10. The consulting method according to one of claims 1 to 8, wherein the electronic entity (EE) is a secure element integrated to the electronic device.

11. An electronic entity (EE) adapted to equip an electronic device comprising a contactless module (CLF) and providing a resource (S, K), the electronic entity (EE) comprising:
- a module for transmitting a request (REQ) for the state of the resource (S, K);
- a module for receiving information (INF) about the state of the resource (S, K) in response to said request;
- a module for storing the information (INF) about the state of the resource (S, K);
- a processor adapted to run a part at least of an application (APPL); and
- a mechanism for invoking a programing interface (API) adapted to read said stored information (INF) about the state of the resource (S, K), the mechanism for invoking the programing interface (API) being activated due to the running of the application (APPL).

12. An electronic device providing a resource (S, K) and equipped with a contactless module (CLF) and an electronic entity (EE) according to claim 11.
